# EUROPÄISCHE PATENTSCHRIFT

(11) **EP 1 818 466 B1**
(45) Veröffentlichungstag und Bekanntmachung des Hinweises auf die Patenterteilung: **28.10.2009**
(21) Anmeldenummer: 07001685.2
(22) Anmeldetag: 26.01.2007
(51) Int. Cl.: E03F 5/14

(54) **Einrichtung zum Entfernen von festen Sperrstoffen aus einem Flüssigkeitsstrom und Verwendung der Einrichtung**
Device for removing solid bulk materials from a fluid flow and utilisation of the device
Dispositif destiné à retirer des matières solides d'une canalisation et utilisation du dispositif

(30) Priorität: 09.02.2006 DE 102006005913
(43) Veröffentlichungstag der Anmeldung: 15.08.2007
(73) Patentinhaber: Ohlmann, Dieter, 91224 Pommelsbrunn (DE)
(72) Erfinder: Ohlmann, Dieter, 91224 Pommelsbrunn (DE)
(74) Vertreter: Bauerschmidt, Peter

(56) Entgegenhaltungen:
- DE-A1- 2 142 540
- DE-C1- 3 910 389

## Beschreibung

Die Erfindung betrifft eine Einrichtung zum Entfernen von festen Sperrstoffen aus einer in einer Strömungsrichtung fließenden Flüssigkeit. Weiterhin betrifft die Erfindung die Verwendung dieser Einrichtung.

Eine derartige Einrichtung kommt beispielsweise als erste Reinigungsstufe im Schmutzwasserzulauf von Klärwerken am sogenannten Fein- oder Siebrechen zum Einsatz. Bei der Flüssigkeit kann es sich also insbesondere um Wasser handeln.

Um möglichst viele der ungelösten Feststoffe aus dem Abwasser zu entfernen werden für den Fein- oder Siebrechen immer feinere Maschenraster vorgesehen. Dadurch erhöht sich aber die am Fein- oder Siebrechen anfallende Menge abzutransportierenden Materials, sodass die Recheneinrichtungen oft mehrstufig ausgeführt werden.

Ein weiterer Grund für einen mehrstufigen Ausbau sind schwimmende Sperrstoffe, wie Bau- oder Kanthölzer und Bohlen, die am Fein- oder Siebrechen nicht oder nur sporadisch aufgenommen werden und zu einer Blockade oder sogar zu einer Beschädigung der Rechenmechanik oder der Folgeeinrichtungen führen können. Die Wiederingangsetzung ist unangenehm und aufwändig. Deshalb sind vor der ersten Rechenstufe oft separate Grobfänge für diese Sperrstoffe vorgesehen. Dies führt zu einem höheren Platzbedarf und auch zu höheren Anschaffungs- sowie Betriebskosten, da auch diese Grobfänge von Zeit zu Zeit geräumt werden müssen.

Aus der DE 39 10 389 C1 und der DE 21 42 540 A sind gattungsgemässe Einrichtungen zum Entfernen von Rechengut aus einer in einer Rinne strömenden Flüssigkeit bekannt. Zum Einsatz kommt jeweils ein siebartiger Rost mit Gitterstäben. Letztere können dabei zumindest teilweise mit einer Schneidkante versehen sein.

Eine Aufgabe der Erfindung besteht darin, eine Einrichtung der eingangs bezeichneten Art anzugeben, die ein möglichst störungsloses einstufiges Entfernen auch von festen Sperrstoffen aus einem Flüssigkeitsstrom gestattet.

Zur Lösung dieser Aufgabe wird eine Einrichtung entsprechend den Merkmalen des Patentanspruchs 1 angegeben.

Die erfindungsgemäße Einrichtung ermöglicht eine Zerkleinerung der in der Flüssigkeit schwimmenden Sperrstoffe. Die so zerkleinerten Teile können dann problemlos von der Räumschnecke aufgenommen und abtransportiert werden. Die Gefahr, dass (unzerkleinerte) Sperrstoffe die Rechenmechanik oder die Folgeeinrichtung blockieren oder beschädigen, ist zumindest erheblich reduziert, wenn nicht sogar komplett beseitigt. Die Zerkleinerungseinheit ist dabei integraler Bestandteil der beispielsweise als erste Reinigungsstufe am Fein- oder Siebrechen eingesetzten erfindungsgemäßen Einrichtung. Das Aufnehmen und Abtransportieren auch der festen Sperrstoffe erfolgt also einstufig. Ein gesonderter vorgelagerter Grobfang ist entbehrlich. Dadurch ergeben sich Platz- und Kostenvorteile.

Andere Stoffe, beispielsweise am Boden des zuführenden Flüssigkeitskanals (= Gerinne) ankommende Geschiebe, wie Steine oder grober Schlamm, werden in gewohnter Weise durch die Räumschnecke aufgenommen und abtransportiert. Die erfindungsgemäß zusätzlich vorgesehene Zerkleinerungseinheit beeinträchtigt dies nicht.

Insgesamt wird bei hoher Zuverlässigkeit ein sehr guter Reinigungsgrad erzielt. Darüber hinaus werden auch die sich anschließenden Folgeeinrichtungen der gesamten Förderkette "Rechenstraße" für das entfernte Material aufgrund der vorgeschalteten Zerkleinerung der Sperrstoffe geschützt. Die am Anfang der Förderkette "Rechenstraße" vorgenommene Sperrstoffzerkleinerung bestimmt die maximale Größe der im Anschluss weiter zu transportierenden Einzelteile (= "Grobkorns"). Alle Folgeeinrichtungen können somit auf diese maximal zu erwartenden Größe des Grobkorns ausgelegt werden. Eine Überdimensionierung ist nicht erforderlich, da eine Verstopfung durch übergroße Sperrstoffe sicher ausgeschlossen werden kann. Somit verbessert die erfindungsgemäße Einrichtung auch die Effizienz und Sicherheit der Gesamtanlage.

Vorteilhafte Ausgestaltungen der erfindungsgemäßen Einrichtung ergeben sich aus den Merkmalen der von Anspruch 1 abhängigen Ansprüchen.

Günstig ist eine Variante, bei der die Räumschnecke im Bereich der Schneidklinge verstärkt ist. Die Schneckenwendel der Räumschnecke hat in der Schneidzone also insbesondere eine größere Wandstärke als an anderer Stelle. Dadurch kann die maximal erzielbare Schneidkraft erhöht werden, sodass auch größerer Sperrstoffe noch sicher zerkleinert werden können.

Weiterhin weist der Rechentrog an seinem aus der Flüssigkeit herausragenden Ende vorzugsweise eine bis etwa zum minimalen Flüssigkeitspegel reichende Trogabdeckung auf, an der die Schneidklingen angebracht sind. Damit ist gewährleistet, dass auch bei niedrigem Flüssigkeitspegel eine sichere Zerkleinerung oben schwimmender Sperrstoffe erfolgt. Aufgrund der Anbringung der Schneidklingen am unteren Ende der Trogabdeckung ergibt sich außerdem ein einfacher konstruktiver Aufbau. Die Trogabdeckung ist oftmals ohnehin vorhanden. Entsprechend der insbesondere halbschalenförmigen Geometrie der Trogabdeckung können vorzugsweise auch mehrere die Räumschnecke halbkreisförmig umgebende Schneidklingen vorgesehen sein.

Günstig ist weiterhin eine Ausgestaltung, bei der das Leitelement mehrteilig ausgeführt ist und insbesondere an einem der mindestens eine Schneidklinge zugewandten Ende ein Schwenkteil aufweist, das vorzugsweise gegen eine Federkraft in eine Förderrichtung der Räumschnecke schwenkbar ist. Dadurch lässt sich ein zu zerkleinernder Sperrstoff sehr gut zunächst der Schneidzone zuführen, um - dort angekommen - mittels der Schneckenwendel auf die Schneidklinge(n) gepresst zu werden, wobei die Schneidklinge(n) erst dann aufgrund einer Schwenkbewegung des Schwenkteils freigegeben werden. So wird eine gute Zerkleinerungsrate erreicht und ein Verhaken des Sperrstoffs an den Schneidklingen während des Zuführvorgangs verhindert.

Gemäß einer anderen vorteilhaften Variante reicht das Leitelement mit einem von der mindestens einen Schneidklinge abgewandten Ende mindestens bis zu einem maximalen Flüssigkeitspegel. Damit ist sichergestellt, dass schwimmende Sperrstoffe auch bei unterschiedlichen Flüssigkeitspegeln der Schneidklinge zugeführt werden.

Vorzugsweise ist das Leitelement außerdem unter einem spitzen Winkel gegen die Strömungsrichtung angeordnet, sodass eine sichere Zuführung der Sperrstoffe zur Schneidklinge resultiert.

Bei einer anderen günstigen Ausgestaltung ist die Welle mechanisch mit einem insbesondere in einer Drehrichtung umschaltbaren Drehantrieb verbunden, der vorzugsweise einen Frequenzumrichter oder einen polumschaltbaren Elektromotor enthält. Eine Drehrichtungsumschaltung (= Reversierbetrieb) ermöglicht bei einer Überlastung die Freigabe des zu zerkleinernden Sperrstoffs, um dann einen erneuten Zerkleinerungsversuch im Vorwärtsbetrieb der Räumschnecke zu starten. Ein Frequenzumrichter erlaubt eine in weiten Grenzen frei einstellbare Drehzahl, wohingegen sich mittels einer Polumschaltung das Drehmoment anheben lässt.

Bevorzugt ist außerdem eine Variante, bei der der Rechentrog und die Welle mit der Räumschnecke ein erstes Modul bilden, seitlich, also quer zur Strömungsrichtung, neben dem mindestens ein weiteres Modul angeordnet ist, das gleich wie das erste Modul aufgebaut ist. Diese parallele Nebeneinanderplatzierung mehrerer, beispielsweise dreier, Module innerhalb eines die Flüssigkeit zuführenden Kanals oder Gerinnes schafft eine Redundanz. So ist auch dann noch eine gewisse Bearbeitungsrate gegeben, wenn sich eines der Module beispielsweise wegen einer Überlastung kurzzeitig im Reversier- oder Handbetrieb befindet. Außerdem lassen sich große quer angetriebene Sperrstoffe leichter und schneller mittels mehrerer Module zerkleinern. Die Zerteilung erfolgt gleichzeitig an mehreren Stellen, wobei der quer liegende Sperrstoff dann an jedem Modul maximal um die Höhe der Schneckenwendel in die Schneidzone eindringen kann.

Günstig ist es, wenn die Wellen der verschiedenen Module gesondert und insbesondere mit unterschiedlicher Drehzahl oder Drehrichtung drehantreibbar sind. Dann ist für jede Welle ein eigener Antrieb vorgesehen. Unterschiedliche Drehzahlen und/oder gegenläufige Drehrichtungen erleichtern die Zerkleinerung großer quer angetriebener Sperrstoffe. Grundsätzlich können die Wellen der Module aber auch synchron, beispielsweise mittels eines einzigen gemeinsamen Antriebs und an jeder Welle vorgesehener Stirnräder, angetrieben werden. Möglich ist außerdem auch ein für alle oder einzelne Module einschaltbarer Handbetrieb, der z.B. in Sondersituationen, wie einem Freifahren des Staubereichs vor der Einrichtung, nützlich sein kann.

Eine weitere Aufgabe der Erfindung besteht darin, eine Verwendung der Einrichtung anzugeben. Zur Lösung dieser Aufgabe wird eine Verwendung entsprechend den Merkmalen des Patentanspruchs 10 angegeben. Bevorzugt kann die erfindungsgemäße Einrichtung in einem kommunalen oder industriellen Klärwerk, in einem Wasserkraftwerk oder bei einer Wasserhaltung für die Binnenschifffahrt oder den Bergbau verwendet werden. Im Zusammenhang mit der Binnenschifffahrt ist insbesondere ein Einsatz im Wasserzu- oder -ablauf einer Schleuse möglich. Generell ist die erfindungsgemäße Einrichtung universell in Flüssigkeitskreisläufen oder - kanälen, in denen grobe Feststoffanteile mit transportiert werden, einsetzbar.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: ein Ausführungsbeispiel einer Einrichtung zum Entfernen von Sperrstoffen aus einem Flüssigkeitsstrom umfassend eine Zerkleinerungseinheit,
- Fig. 2: eine vergrößerte Ansicht der Einrichtung gemäß Fig. 1 im Bereich der Zerkleinerungseinheit,
- Fig. 3: eine Querschnittsdarstellung der Einrichtung gemäß Fig. 1 im Bereich der Zerkleinerungseinheit, und
- Fig. 4: ein Ausführungsbeispiel einer Anlage, die drei modulare parallel nebeneinander angeordnete Einrichtungen zum Zerkleinern und Entfernen von Sperrstoffen aus einem Flüssigkeitsstrom hat.

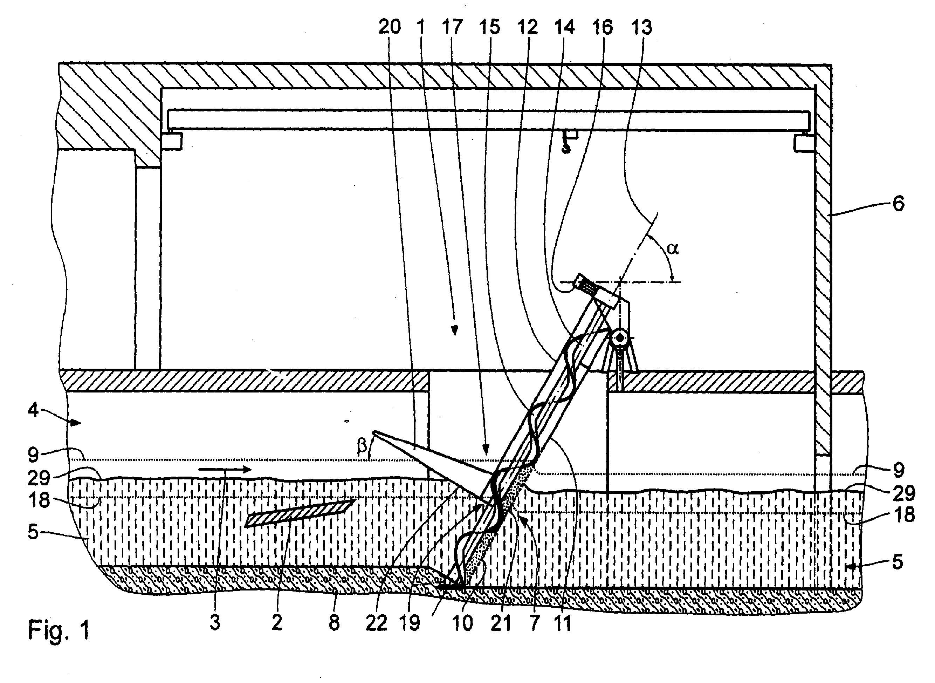

Einander entsprechende Teile sind in Fig. 1 bis 4 mit denselben Bezugszeichen versehen.

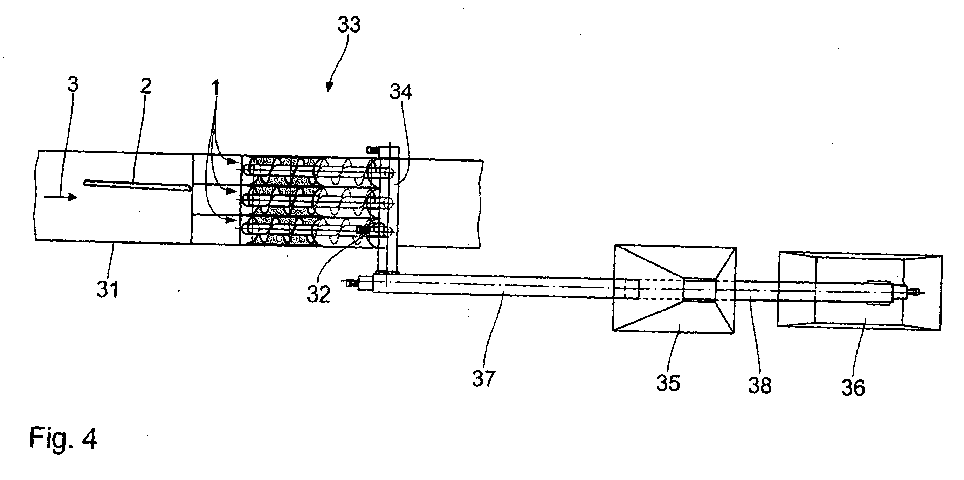

In Fig. 1 ist ein Ausführungsbeispiel einer Einrichtung 1 zum Entfernen von festen und insbesondere schwimmfähigen Sperrstoffen 2 aus einer in einer Strömungsrichtung 3 fließenden Flüssigkeit gezeigt. Im Ausführungsbeispiel handelt es sich bei der Flüssigkeit um ein in einem Abwasserkanal 4 zugeführtes verschmutztes Wasser 5. Die Einrichtung 1 ist Teil eines nicht näher gezeigten Klärwerks. Insbesondere ist sie die erste Reinigungs- und Transportstufe einer in Fig. 4 gezeigten Teilanlage des Klärwerks, nämlich der Förderkette "Rechenstraße". Sie ist in einem sogenannten Rechenhaus 6 des Klärwerks untergebracht.

Die Einrichtung 1 hat einen Rechentrog 7, der schräg geneigt zur Strömungsrichtung 3 des Wassers 5 angeordnet ist. Eine Mittenachse des Rechentrogs 7 bildet mit der Strömungsrichtung 3 einen spitzen Aufstellungswinkel α, der je nach Bauart und Durchsatzleistung der Einrichtung 1 insbesondere im Bereich zwischen 30° bis 90° liegen kann.

Der Rechentrog 7 ist an einem Boden 8 des Abwasserkanals 5 schräg gelagert und erstreckt sich vom Boden 8 bis über einen maximalen Wasserpegel 9 hinaus. In seinem unteren Bereich, also in dem Bereich, in dem er sich im Wasser 5 befindet, hat der Rechentrog 7 ein halbzylinderförmiges Siebelement 10, dem sich im aus dem Wasser 5 herausstehenden oberen Bereich ein ebenfalls halbzylinderförmiges, aber unperforiertes erstes Halbschalenelement 11 anschließt. In diesem oberen Bereich ist der Rechentrog 7 mit einer Trogabdeckung in Form eines halbzylinderförmigen zweiten Halbschalenelements 12 versehen. Grundsätzlich kann das erste Halbschalenelement 11 bei einem nicht gezeigten alternativen Ausführungsbeispiel auch perforiert sein, beispielsweise um in diesem Bereich eine Vorentwässerung des Rechenguts vorzunehmen.

Das auch als Feinrechen bezeichnete Siebelement 10 ist als Lochsieb ausgeführt. Dessen Lochdurchmesser liegen im Bereich zwischen von 3 mm und 10 mm. Grundsätzlich kann aber auch ein Spaltsieb zum Einsatz kommen, bei dem die Spaltabstände im allgemeinen von 3 mm bis 8 mm reichen.

Der Rechentrog 7 nimmt eine um eine Drehachse 13 drehantreibbare Welle 14 auf, die an ihrem Umfang mit einer eine Räumschnecke 15 bildende Schneckenwendel versehen ist. Die Räumschnecke 15 ist mittels der Welle 14 fußgelagert, also am Boden 8 gelagert, und an ihrem oberen Ende angetrieben. Dort ist ein als Elektromotor ausgebildeter Antrieb 16 vorgesehen, der in seiner Drehzahl einstellbar und in seiner Drehrichtung umschaltbar ist. Von der gewählten Drehrichtung hängt es ab, ob die Räumschnecke 15 in ihrer nach oben weisenden Förderrichtung oder in entgegengesetzter Richtung, der Reversierrichtung, betrieben wird.

Die Einrichtung 1 umfasst außerdem zur Zerkleinerung der im Wasser 5 schwimmenden Sperrstoffe 2 eine Zerkleinerungseinheit 17 mit einer etwa auf Höhe eines minimalen Wasserpegels 18 angeordneten Schneidzone 19 und mit einem Leitelement 20, das die in der Flüssigkeit schwimmenden Sperrstoffe 2 der Schneidzone 19 zuführt. Im Bereich der Schneidzone 19 hat die Schneckenwendel der Räumschnecke 15 eine verstärkte Wand 21.

Das an den Seitenwänden des Abwasserkanals 4 befestigte Leitelement 20 weist eine ebene und vorzugsweise glatte untere Zuführungsfläche 22 auf. Es endet mit seinem unteren Ende in etwa auf Höhe des minimalen Wasserpegels 18 und erstreckt sich mit seinem anderen, also dem oberen Ende bis über den maximalen Wasserpegel 9 hinaus. Außerdem ist die Zuführungsfläche 22 unter einem spitzen Winkel β gegen die Strömungsrichtung 3 angeordnet.

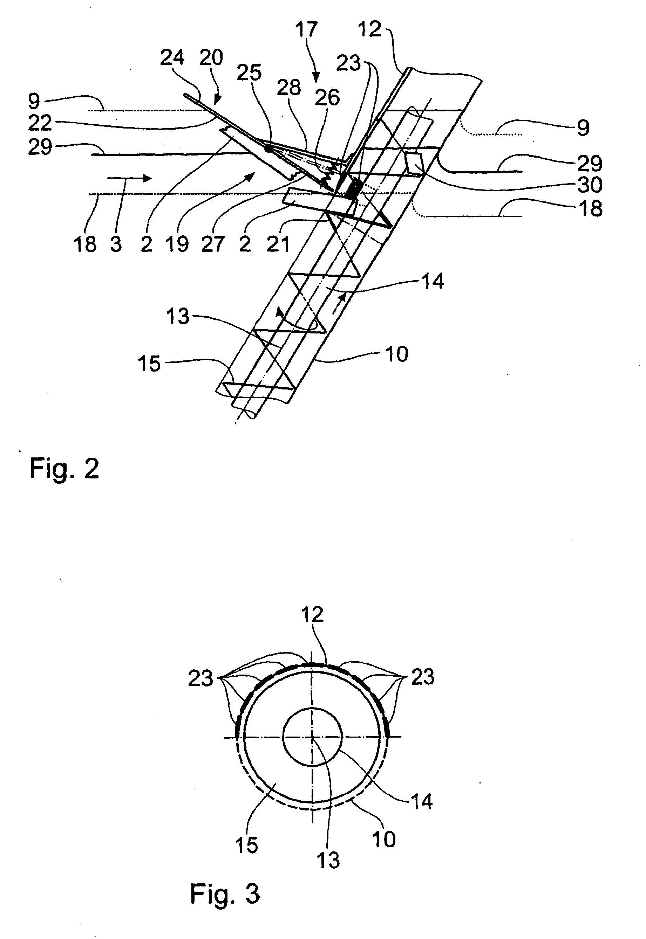

Weitere Details der Zerkleinerungseinheit 17 gehen aus der vergrößerten Ansicht gemäß Fig. 2 sowie aus der Querschnittsdarstellung gemäß Fig. 3 hervor.

In der Schneidzone 19 sind mehrere Schneidklingen 23 vorgesehen. Wie aus Fig. 3 ersichtlich umgeben sie die Räumschnecke 15 halbkreisförmig. Sie sind am unteren Ende des als Trogabdeckung ausgebildeten Halbschalenelements 12 angebracht.

Das Leitelement 20 ist mehrteilig. Es umfasst eine Hauptplatte 24, eine um ein Schwenklager 25 gegen die Kraft einer Feder 26 schwenkbare Schwenkplatte 27 sowie ein auch am Halbschalenelement 12 befestigtes Gegenstück 28. Die Feder 26 ist zwischen der Schwenkplatte 27 und dem Gegenstück 28 eingespannt.

Im Folgenden werden die Funktionsweise und besondere Vorteile der Einrichtung 1 näher beschrieben.

Die Einrichtung 1 zerkleinert große insbesondere an einer Wasseroberfläche 29 treibende Sperrstoffe 2 in mittels der Räumschnecke 15 gut weiter transportierbare Teilstücke 30. Dazu werden die Sperrstoffe 2 zunächst längs der unteren Zuführungsfläche 22 in die Schneidzone 19 transportiert. In Fig. 2 ist ein noch an der Wasseroberfläche 29 befindlicher Sperrstoff 2 beim Auftreffen auf die untere Zuführungsfläche 22 sowie ein weiterer bereits in der Schneidzone 19 befindlicher Sperrstoff 2 dargestellt. Letzterer wird mittels der verstärkten Wand 21 der Räumschnecke 15 gegen die Schneidklingen 23 gedrückt und aufgrund der fortlaufenden Keilwirkung des sich drehenden Schneckenwendels immer weiter in die Schneidklingen 23 getrieben, bis ein Teilstück 30 vollständig abgetrennt ist.

Dabei wird die Schwenkplatte 27 gegen die Kraft der Feder 26 in Förderrichtung der Räumschnecke 15, also auf das Gegenstück 28 zu, geschwenkt, sodass die vorher zumindest teilweise durch die Schwenkplatte 27 abgedeckten oder abgeschirmten Schneidklingen 23 freigegeben werden. Diese vorteilhafte Abschirmung bewirkt, dass die Sperrstoffe 2 vor dem eigentlichen Schneidvorgang weitgehend unbehindert durch die Schneidklingen 23 möglichst weit in die Schneidzone 19 hinein gelangen können. Nach dem Abtrennen des Teilstücks 30 durch die Schneidklingen 23 kehrt die Schwenkplatte 27 aufgrund der Rückstellkraft der Feder 26 wieder in ihre Ausgangslage zurück, sodass der nächste zu zerkleinernde Sperrstoff 2 der Schneidzone 19 zugeführt werden kann.

Aufgrund der speziellen Anordnung der Schneidklingen 23 und der verstärkten Wand 21 der Räumschnecke 15 können die auftretenden und von der Einrichtung 1 aufzunehmenden Scherkräfte um etwa eine Größenordnung reduziert werden. Dies ist vor allem bei der Zerkleinerung sehr dicker Balken vorteilhaft, da dann Scherkräfte von bis zu 60 t auftreten können.

Falls es in seltenen Ausnahmesituationen zu einer Überlastung oder einer Blockade der Schneidzone 19 oder der Räumschnecke 15 kommen sollte, kann die Drehrichtung des Antriebs 16 umgeschaltet werden, sodass die Einrichtung 1 mit umgekehrter Förderrichtung (= Reversierbetrieb) betrieben wird. Ergänzend oder alternativ ist auch ein Handbetrieb möglich.

Die Einrichtung 1 zur Aufnahme und Zerkleinerung von Sperrstoffen 2 zeichnet sich durch eine einfache und robuste Bauweise aus. Abgesehen von der Zerkleinerungseinheit 17 kann für die anderen Bestandteile auf gängige und bewährte Komponenten zurückgegriffen werden.

Bei einem breiten Abwasserkanal 31 können, wie aus Fig. 4 ersichtlich, auch mehrere der dann insbesondere modulartig realisierten Einrichtungen 1 seitlich nebeneinander angeordnet werden. Die im Ausführungsbeispiel gezeigten drei Einrichtungen 1 werden parallel betrieben. Dies erhöht die Förderleistung. Je nach Ausgestaltung kann der Betrieb der Module unabhängig voneinander oder synchron erfolgen. Ein unabhängiger Betrieb bietet Vorteile hinsichtlich der Redundanz und der Zerkleinerungseffizienz großer quer angetriebener Sperrstoffe 2. Dagegen ermöglicht der in Fig. 4 gezeigte Synchronbetrieb eine Reduzierung der benötigten Einzelkomponenten. So ist beispielsweise nur ein einziger gemeinsamer Antrieb 32 für alle Module vorhanden.

Ansonsten ist in Fig. 4 ein Ausführungsbeispiel einer Anlage 33 in schematisierter Draufsicht wiedergegeben, die die drei modularen Einrichtungen 1 als erste Reinigungs- und Transportstufe umfasst. Weitere Bestandteile sind eine Rechengutpresse und -wäsche 34, in der das von den Einrichtungen 1 geförderte Material entwässert und komprimiert wird, sowie ein Pufferbehälter 35 und ein Container 36, die mittels Längsförderern 37 und 38 an die Rechengutpresse und -wäsche 34 angebunden sind.

Die Einrichtungen 1 mit den integrierten Zerkleinerungseinheiten 17 bieten den Vorteil, dass alle folgenden Komponenten der Anlage 33 nur auf die durch die Zerkleinerungseinheiten 17 bestimmte maximal mögliche Größe der Teilstücke 30 und nicht auf die sehr viel größeren Sperrstoffe 2 ausgelegt werden müssen. Außerdem ist die Integration der Zerkleinerungseinheiten 17 in die Einrichtungen 1 günstiger als eine grundsätzlich ebenfalls denkbare Integration in eine der Recheneinrichtung nachgeordneten Komponenten, beispielsweise in die Rechengutpresse und -wäsche 34.

Da der Zerkleinerungsvorgang unter Umständen eine gewisse Zeit benötigt (z.B. Reversierbetrieb oder niedrige Drehzahl der Räumschnecke 15), kann es am Ort der Zerkleinerung nämlich zu einer langsameren Fördergeschwindigkeit und als Folge davon zu einem Materialstau kommen. Findet die Zerkleinerung wie bei der Einrichtung 1 am Anfang der durch die Anlage 33 gebildeten Förderkette statt, steht mit dem ohnehin vorhandenen Abwasserkanal 4 oder 31 ein ausreichend großer Rückstauraum zur Verfügung, in dem sich das noch nicht abtransportierte Material zumindest vorübergehend ansammeln kann. Wird die Zerkleinerung dagegen an anderer Stelle, wie z.B. an der Rechengutpresse und -wäsche 34, vorgenommen, ist ohne zusätzliche konstruktive Maßnahmen kein vergleichbarer Rückstauraum verfügbar. Eine so platzierte Zerkleinerungseinheit stellt dann selbst ein potentielles Hindernis dar.

Demgegenüber sind die in die Einrichtungen 1 integrierten Zerkleinerungseinheiten 17 aus den genannten Gründen deutlich günstiger. Wenn außerdem - anders als beim Ausführungsbeispiel gemäß Fig. 4 - mehrere gesondert angetriebene Einrichtungen 1 nebeneinander angeordnet werden, bleibt selbst bei Komplettblockade einer der Einrichtungen 1 trotzdem noch eine Teilförderung mittels der übrigen Einrichtungen 1 aufrecht erhalten.

## Patentansprüche

1. Einrichtung zum Entfernen von festen Sperrstoffen (2) aus einer in einer Strömungsrichtung (3) fließenden Flüssigkeit (5) umfassend mindestens:
a) einen Rechentrog (7), der unter einem Winkel (α) schräg geneigt zur Strömungsrichtung (3) in der Flüssigkeit (5) angeordnet ist, im Bereich der Flüssigkeit (5) ein Siebelement (10) und an seinem aus der Flüssigkeit (5) herausragenden Ende eine mit einem unteren Ende bis etwa zu einem minimalen Flüssigkeitspegel (18) reichende Trogabdeckung (12) aufweist,
b) eine längs sowie zumindest teilweise innerhalb des Rechentrogs (7) angeordnete und drehantreibbare Welle (14), die an ihrem Umfang mit einer Räumschnecke (15) versehen ist, **dadurch gekennzeichnet,**
c) **dass** eine Zerkleinerungseinheit (17) zur Zerkleinerung der in der Flüssigkeit schwimmenden Sperrstoffe (2) vorgesehen ist, mit
c1) mehreren etwa auf Höhe des minimalen Flüssigkeitspegels (18) am unteren Ende der Trogabdeckung (12) angeordneten und die Räumschnecke (15) halbkreisförmig umgebenden Schneidklingen (23) und
c2) einem die in der Flüssigkeit (5) schwimmenden Sperrstoffe (2) auf die Schneidklingen (23) lenkenden Leitelement (20).

2. Einrichtung nach Anspruch 1, **dadurch gekennzeichnet, dass** die Räumschnecke (15) im Bereich der Schneidklingen (23) verstärkt ist.

3. Einrichtung nach Anspruch 1, **dadurch gekennzeichnet, dass** das Leitelement (20) mehrteilig ausgeführt ist und insbesondere an einem den Schneidklingen (23) zugewandten Ende ein Schwenkteil (27) aufweist, das vorzugsweise gegen eine Federkraft in eine Förderrichtung der Räumschnecke (15) schwenkbar ist.

4. Einrichtung nach Anspruch 1, **dadurch gekennzeichnet, dass** das Leitelement (20) mit einem von den Schneidklingen (23) abgewandten Ende mindestens bis zu einem maximalen Flüssigkeitspegel (9) reicht.

5. Einrichtung nach Anspruch 1, **dadurch gekennzeichnet, dass** das Leitelement (20) unter einem spitzen Winkel (β) gegen die Strömungsrichtung (3) angeordnet ist.

6. Einrichtung nach Anspruch 1, **dadurch gekennzeichnet, dass** die Welle (14) mechanisch mit einem insbesondere in einer Drehrichtung umschaltbaren Drehantrieb (16; 32) verbunden ist, der vorzugsweise einen Frequenzumrichter oder einen polumschaltbaren Elektromotor enthält.

7. Einrichtung nach Anspruch 1, **dadurch gekennzeichnet, dass** der Rechentrog (7) und die Welle (14) mit der Räumschnecke (15) ein erstes Modul bilden, seitlich neben dem mindestens ein weiteres Modul angeordnet ist, das gleich wie das erste Modul aufgebaut ist.

8. Einrichtung nach Anspruch 7 **dadurch gekennzeichnet, dass** die Wellen (14) der verschiedenen Module gesondert und insbesondere mit unterschiedlicher Drehzahl oder Drehrichtung drehantreibbar sind.

9. Verwendung der Einrichtung nach einem der vorhergehenden Ansprüche in einem kommunalen oder industriellen Klärwerk, in einem Wasserkraftwerk oder bei einer Wasserhaltung für die Binnenschifffahrt oder den Bergbau.

## Claims

1. Device for removing solid bulk materials (2) from a liquid (5) flowing in a direction of flow (3), the device comprising at least
a) one screen trough (7) which is arranged in the liquid (5) such as to be obliquely inclined at an angle (α) relative to the direction of flow (3), which comprises a screen member (10) in the region of the liquid (5) and a trough cover (12) on its end projecting out of the liquid (5), with a lower end of the trough cover (12) extending approximately up to a minimum liquid level (18);
b) one rotatably drivable shaft (14) which is arranged longitudinally and at least partially inside the screen trough (7) and is provided with a clearing auger (15) on its periphery, **characterised in that**
c) a crushing unit (17) is provided for crushing the bulk materials (2) floating in the liquid, the crushing unit (17) comprising
c1) several cutting blades (23) which are arranged at the lower end of the trough cover (12) approximately on a level with the minimum liquid level (18) and which surround the clearing auger (15) in the shape of a semi-circle; and
c2) a guide member (20) which guides the bulk materials (2) floating in the liquid (5) towards the cutting blades (23).

2. Device according to claim 1, **characterised in that** the clearing auger (15) is reinforced in the region of the cutting blades (23).

3. Device according to claim 1, **characterised in that** the guide member (20) is comprised of multiple parts and comprises a pivot member (27) in particular on an end facing the cutting blades (23), the pivot member (27) being preferably pivotable against a spring force in a direction of conveyance of the clearing auger (15).

4. Device according to claim 1, **characterised in that** an end of the guide member (20) facing away from the cutting blades (23) extends at least up to a maximum liquid level (9).

5. Device according to claim 1, **characterised in that** the guide member (20) is arranged at an acute angle (β) opposite to the direction of flow (3).

6. Device according to claim 1, **characterised in that** the shaft (14) is mechanically connected to a rotary drive (16; 32) which preferably comprises a frequency converter or a multiple-speed electric motor, with a direction of rotation of said rotary drive (16; 32) being in particular reversible.

7. Device according to claim 1, **characterised in that** the screen trough (7) and the shaft (14) form a first module with the clearing auger (15), with at least another module which is identical to the first module being arranged laterally next to said first module.

8. Device according to claim 7, **characterised in that** the shafts (14) of the various modules are rotatably drivable separately and in particular at different speeds or directions of rotation.

9. Use of the device according to any one of the preceding claims in a communal or industrial sewage treatment plant, in a hydroelectric plant or in a water drainage system for inland navigation or mining.

## Revendications

1. Dispositif destiné à retirer des matières solides (2) d'un liquide (5) s'écoulant dans une direction d'écoulement (3), comprenant au moins :
a) une auge de dégrillage (7) disposée en oblique en formant un angle (α) par rapport à la direction d'écoulement (3) dans le liquide (5), et qui présente, dans la zone du liquide (5), un élément tamis (10) et, à son extrémité faisant saillie du liquide (5), un couvercle (12) s'étendant, par une extrémité inférieure, jusqu'à sensiblement un niveau de liquide minimum (18),
b) un arbre (14) disposé longitudinalement ainsi qu'au moins partiellement à l'intérieur de l'auge de dégrillage (7) et pouvant être entraîné en rotation, qui est pourvu, sur sa périphérie, d'une vis sans fin d'évacuation (15), **caractérisé en ce qu'**est prévue
c) une unité de broyage (17) pour broyer les matières solides (2) flottant dans le liquide, comprenant :
c1) plusieurs lames de coupe (23) disposées sensiblement à hauteur du niveau de liquide minimum (18) à l'extrémité inférieure du couvercle (12) et entourant en demi-cercle la vis sans fin d'évacuation (15), et
c2) un élément de guidage (20) dirigeant les matières solides (2) flottant dans le liquide (5) sur les lames de coupe (23).

2. Dispositif selon la revendication 1, **caractérisé en ce que** la vis sans fin d'évacuation (15) est renforcée dans la région des lames de coupe (23).

3. Dispositif selon la revendication 1, **caractérisé en ce que** l'élément de guidage (20) est réalisé en plusieurs parties et présente, en particulier à une extrémité tournée vers les lames de coupe (23), un élément pivotant (27) qui peut pivoter de préférence à l'encontre de la force d'un ressort dans une direction de transport de la vis sans fin d'évacuation (15).

4. Dispositif selon la revendication 1, **caractérisé en ce que** l'élément de guidage (20), par une extrémité opposée aux lames de coupe (23), s'étend jusqu'à un niveau de liquide maximum (9).

5. Dispositif selon la revendication 1, **caractérisé en ce que** l'élément de guidage (20) est disposé en formant un angle aigu (β) dans une direction opposée à la direction d'écoulement (3) du liquide.

6. Dispositif selon la revendication 1, **caractérisé en ce que** l'arbre (14) est relié mécaniquement à une commande de rotation (16 ; 32) commutable en particulier dans un sens de rotation, qui comporte, de préférence, un convertisseur de fréquence ou un moteur électrique à inversion de polarité.

7. Dispositif selon la revendication 1, **caractérisé en ce que** l'auge de dégrillage (7) et l'arbre (14) forment avec la vis sans fin d'évacuation (15) un premier module, sur le côté duquel est disposé au moins un autre module ayant une configuration identique au premier module.

8. Dispositif selon la revendication 7, **caractérisé en ce que** les arbres (14) des différents modules peuvent être entraînés en rotation séparément et en particulier à une vitesse différente ou dans un sens de rotation différent.

9. Utilisation du dispositif selon l'une ou plusieurs des revendications précédentes dans une station d'épuration communale ou industrielle, dans une centrale hydro-électrique ou dans le rabattement de nappe pour la navigation intérieure ou l'exploitation minière.
